# EUROPEAN PATENT APPLICATION

(11) **EP 0 764 609 A1**
(43) Date of publication of application: **26.03.1997**
(21) Application number: 96302790.9
(22) Date of filing: 19.04.1996
(51) Int. Cl.: C01B 21/068, C04B 35/591

(54) **Silicon nitride based sintered product and method of manufacturing the same**

(30) Priority: 22.09.1995 JP 269487/95
(71) Applicant: ISUZU CERAMICS RESEARCH INSTITUTE CO., LTD., Fujisawa-shi, Kanagawa-ken (JP)
(72) Inventor: Yamada, Toshiyuki, Yamato-shi, Kanagawa-ken (JP)
(74) Representative: Jenkins, Peter David

(57) **Abstract**

A silicon nitride based sintered product having strength at a high temperature, comprising a silicon powder or a powder mixture of silicon and silicon nitride with sintering assistant, a compound powder of iron and a compound powder containing at least one of vanadium, niobium and tantalum as elements of Group 5b of the periodic table. The silicon nitride based sintered product contains silicon, aluminum, yttrium, oxygen, nitrogen, iron and at least one element of Group 5b of the periodic table, and when said components are present as a compound of silicon nitride, alumina, yttria, a compound of iron and a compound of at least one element of Group 5b of the periodic table and the weights of said components are represented by a, b, c, d and e, the following formulae are fulfilled:$\text{1≤ 100 (b+c+d+e) x (a+b+c+d+e) ≤15,}$$\text{1≤(b+c)/d,}$$\text{0.005≤ 100d/ (a+b+c+d+e) ≤ 7.5, and}$$\text{0.005≤ e/(b+c)≤ 1}$

## Description

The present invention relates to a silicon nitride based sintered product essentially consisting of an inexpensive silicon powder, and particularly to a silicon nitride based sintered product which has excellent heat resistance, resistance to thermal shock and corrosion resistance.

As disclosed in Japanese Patent Laid-Open No. 191,063/1985, a silicon nitride based sintered product is known in which oxide of elements of Group 3a of the periodic table having an ionic radius of 0.97 angstrom or less, oxide of elements of Group 4a of the periodic table having an ionic radius of 0.97 angstrom or more, and oxide or nitride of elements of Group 2a of the periodic table are added to silicon nitride.

Further, as disclosed in Japanese Patent Laid-Open No. 248,773/1988, a silicon nitride based sintered product is known in which oxide of elements of Group 3a of the periodic table and oxide of elements of Group 4a of the periodic table are added to β-silicon nitride. However, a silicon nitride based sintered product having strength at a high temperature cannot be obtained merely by adding rare earth elements of Group 3a of the periodic table to silicon nitride. The grain structure can be refined by adding alumina to silicon nitride, however, a problem arises in that the softening point of the grain boundary phase is so low that the strength at high temperature is materially lowered.

Japanese Patent Laid-Open No. 345,536/1994 discloses a method of increasing the strength of a sintered surface of a silicon nitride based sintered product in which silicon nitride powder, powder of silicon nitride and silicon or powder of silicon nitride, yttria and alumina is used as a filling powder (i.e., to fill a space between a crucible and a molded product) to perform the sintering. However, when silicon nitride powder or powder of silicon nitride and silicon is used, the sintering assistant component in the molded product becomes dispersed in the silicon nitride powder as the filling powder such that the sintering of the molded product is not promoted and the density of the sintered product is low, thus failing to obtain satisfactory strength. Further, when powder of silicon nitride, yttria and alumina is used, the filling powder itself is apt to be sintered, and the sintered filling powder adheres to the surface of the sintered product to make the surface of the sintered product rough.

Japanese Patent Laid-Open No. 50,167/1992 discloses a silicon nitride based composite sintered product of an ultrafine composite construction in which heat resistant compound particles or grains, such as fine silicon carbide, of some nanometer size (10⁻⁹m), are dispersed as a second phase in silicon nitride particles of micron size, thereby considerably improving the high temperature characteristics, particularly the strength at high temperature. However, at present, the aforementioned silicon nitride based composite sintered product has to be produced by the hot press method or the HIP method in order to provide the necessary fineness of the sintered product, which methods are not suitable for mass production.

In view of the above-described problems, it is an aim of the present invention to provide a silicon nitride based sintered product which uses inexpensive silicon as a raw material and which has high mechanical strength and has excellent heat resistance, resistance to thermal shock and corrosion resistance.

According to the present invention, a molded product is prepared from a mixture of a compound (oxide, nitride or silicide) of silicon (Si), aluminum (Al), yttrium (Y), oxygen (O), nitrogen (N), iron (Fe) and at least one element of Group 5b of the periodic table (namely vanadium (V), niobium (Nb) and tantalum (Ta)), and the resultant molded product is heated in an atmosphere including a nitrogen component so as thereby to obtain a silicon nitride based sintered product which is free from pores and remaining silicon, is dense and has a high strength.

In the present invention, as the main raw material for the silicon nitride based sintered product, inexpensive silicon and/or silicon nitride powder is used, and as a sintering assistant, oxides of aluminum and yttrium or the like are preferably used. Prior to sintering the molded product, the molded product is preferably coated with a powder for suppressing the vaporization of the sintering assistant, particularly with silicon powder before sintering, so as thereby to obtain a silicon nitride based sintered product, which is free from segregation or omnipresentation of the sintering assistant, has a uniform tissue, and has a surface of high mechanical strength.

The reaction sintered silicon nitride based product of the present invention comprises a crystalline phase of silicon nitride, a grain boundary phase of a crystalline substance comprising silicon, aluminum, yttrium, oxygen and nitrogen, a silicide phase of at least one element of Group 5b of the periodic table and a silicide phase of iron as an impurity.

In the present invention, for providing the required fineness of the sintered product by a low pressure sintering method, use is made of silicon powder containing iron as an impurity as the main raw material. A molded product is formed from a mixture which includes a powder of sintering assistant and a powder of an oxide at least one element of Group 5b of the periodic table. The molded product is sintered at a temperature of from 1750 to 2000°C in a nitrogen gas at a pressure of 10 bar or less to obtain a fine grained composite (*in-situ*) silicon nitride based sintered product.

Since the melting points of the oxides of the elements of Group 5b of the periodic table are approximately 1700°C, the oxide of the at least one element of Group 5b of the periodic table contained in the molded product is a liquid phase at the sintering temperature of 1750°C or above and thereby promotes sintering. The oxide of the elements of Group 5b of the periodic table in some nanometers is converted into a silicide of the at least one element of Group 5b of the periodic table at a high melting point, uniformly dispersed and separated into a matrix of silicon nitride. The particle size of the silicide of the at least one element of Group 5b of the periodic table is 5 microns or less. A part of the silicide of the at least one element of Group 5b of the periodic table is present in the grain boundary phase, and the remainder is present in the form taken into the silicon nitride crystalline phase.

In the present invention, yttria and alumina are preferably used as the sintering assistant, and at least one of niobium, vanadium and tantalum as the elements of Group 5b of the periodic table. Particularly, when the amount of the oxide of the elements of Group 5b of the periodic table is set to from 0.05 to 15 wt %, good corrosion resistance and heat resistant strength are obtained.

Since silicon and silicon nitride containing much iron as an impurity can be used as raw materials, it is possible to provide at low cost many kinds of mechanical structural members which have excellent mechanical strength at high temperature.

As compared to conventional silicon nitride based sintered products which use silicon nitride as a main raw material, the amount of volume contraction of the silicon nitride based sintered product of the present invention caused by sintering can be reduced to from one-half to one-third of that of the conventional silicon nitride based sintered products. Furthermore, the near netting property is excellent and the production cost can be reduced.

Preferred embodiments of the present invention will now be described hereinbelow by way of example only with reference to the accompanying drawings, in which:

Figure 1 shows a graph of the 4-point bending strength of a silicon nitride based sintered product of the present invention and that of a comparative sample.

Figure 2 shows the distribution of aluminum components in a section of the surface layer portion of the silicon nitride based sintered product of the present invention.

Figure 3 shows a plot of the amounts of aluminum and yttrium in the surface layer portion of the silicon nitride based sintered product of the present invention obtained by EPMA.

Figure 4 shows schematically a sectional view of the silicon nitride based sintered product of the present invention.

Figure 5 shows a graph of the relationship between the ratio of the content ratio of aluminum components in the surface layer portion of the silicon nitride based sintered product with respect to the content ratio of aluminum components in the inner layer portion of the silicon nitride based sintered product and the mechanical strength.

Figure 6 shows a graph of the breakdown characteristics of silicon nitride based sintered products of the present invention and those of a comparative sample.

Figure 7 shows a perspective view of a breakdown testing method employed on the silicon nitride based sintered products.

Figure 8 shows schematically the texture of a silicon nitride based composite sintered product of the present invention.

Figure 9 shows a graph of the relationship between the amount of oxide of elements of Group 5b of the periodic table in the silicon nitride based sintered product of the present invention and the 4-point bending strength.

Figure 10 shows a graph of the relationship between the amount of sintering assistant, oxide of elements of Group 5b of the periodic table and oxide of iron in the silicon nitride based sintered product of the present invention and the 4-point bending strength.

Figure 11 shows the distribution of aluminum components in a section of the surface layer portion of the silicon nitride based sintered product of the comparative sample.

Figure 12 shows a plot of the amounts of aluminum and yttrium in the surface layer portion of the silicon nitride based sintered product of the comparative obtained by EPMA.

The silicon nitride based sintered product of the present invention uses essentially a silicon powder or a powder mixture of silicon and silicon nitride as the raw material. A molded product is prepared from a mixture obtained by adding a sintering assistant powder for silicon nitride and a powder of a compound containing at least one of vanadium, niobium and tantalum as elements of Group 5b of the periodic table to the raw material. The molded product is then sintered.

Inexpensive silicon and silicon nitride, which contain much iron as an impurity, can be used. The silicon nitride based sintered product of the present invention preferably contains from 55 to 65 parts of silicon and from 25 to 35 parts of silicon nitride.

As a sintering assistant for silicon nitride, alumina and yttria are preferably used. The silicon nitride based sintered product preferably contains from 3 to 5 parts of alumina and from 6 to 7 parts of yttria.

The elements of Group 5b of the periodic table, namely at least one of vanadium, niobium and tantalum, are present within the silicon nitride based sintered product as a compound (oxide, nitride, silicide, etc.) of vanadium oxide (V₂O₃), niobium oxide (Nb₂O₅) and tantalum oxide (Ta₂O₅). The silicon nitride based sintered product preferably contains 0.1 to 5 parts of at least one element of Group 5b of the periodic table. That is, the silicon nitride based sintered product preferably contains 0.005 to 5 wt.% of at least one element of Group 5b of the periodic table. The elements of Group 5b of the periodic table serve to decrease the volume contraction of the molded product caused by sintering.

In the present invention, the surface of the molded product having silicon nitride as a main component can be coated, before sintering, with silicon powder, and then sintered in an atmosphere containing nitrogen to increase the mechanical strength of the sintered surface. On sintering, the silicon coated on the surface of the molded product is converted into silicon nitride. This silicon nitride coating on the sintered surface suppresses the segregation or omnipresentation of the sintering assistant and thereby results in a uniform, dense sintered surface and surface layer portion. The mechanical properties of the silicon nitride based sintered product are improved by the uniform, dense surface layer portion.

In the silicon nitride based sintered product of the present invention, the components of silicon, aluminum, yttrium, iron, tantalum, nitrogen and oxygen are present as silicon nitride (Si₃N₄), alumina (Al₂O₃), yttria (Y₂O₃), ferrous iron oxide (Fe₂O₃), and tantalum oxide (Ta₂O₅), and when the weights of said components are represented by a, b, c, d and e, the following formulae are fulfilled:$\text{1≤ 100(b+c+d+e)x(a+b+c+d+e)≤15,}$$\text{1≤(b+c)/d,}$$\text{0.005≤ 100d/(a+b+c+d+e) ≤ 7.5,}$ and$\text{0.005≤ e/(b+c)≤ 1}$

The silicon nitride based sintered product of the present invention is free from pores and remaining silicon, is dense and has excellent mechanical strength. According to studies made using a scanning electronic microscope (SEM), compound particles having a particle diameter of 0.2 micron or more containing the elements of Group 5b of the periodic table and occupying an area of 0.1 to 9.0 % in a two-dimensional region of 200 micron x 200 micron have been observed in the silicon nitride based sintered product.

### EXAMPLE 1

Powders consisting of inexpensive silicon (Si) containing much iron (Fe) as an impurity, silicon nitride (Si₃N₄), alumina (Al₂O₃), yttria (Y₂O₃) and tantalum oxide (Ta₂O₅) were mixed in the weight ratios (composition ratios) shown in Table 1 (Samples 1 to 7). Each resultant mixture was put into a resin pot together with methanol, a dispersing agent and resin balls, and was subjected to ball milling for 48 hours to prepare a slurry. Each slurry was then dried, crushed, and molded by a press machine. The molded products were prepared by a cold isostatic pressing method (CIP) at a pressure of 2000 kgf/cm². The molded products were sintered at a temperature of from 1800 to 1900°C in a nitrogen atmosphere at a pressure of 9.5 kgf/cm² to obtain silicon nitride based sintered products.

The thus obtained silicon nitride based sintered products were subjected to a 4-point bending strength (anti-break strength) test. The results are shown in Table 1.

**TABLE 1**

| Sample No. | material (wt. part) | | | | | bending strength | | area |
|---|---|---|---|---|---|---|---|---|
| | Si | Si₃N₄ | Y₂O₃ | Al₂O₃ | Group 5b element | room temp MPa | 1000°C MPa | (%) |
| Comp. | 59.2 | 30.9 | 6.49 | 3.89 | | 940 | 620 | 0 |
| 1 | 59.2 | 30.9 | 6.49 | 3.89 | Ta₂O₅ 0.1 | 936 | 650 | 0.15 |
| 2 | 59.2 | 30.9 | 6.49 | 4.30 | Ta₂O₅ 0.25 | 982 | 720 | 0.37 |
| 3 | 59.2 | 30.9 | 6.49 | 3.89 | Ta₂O₅ 0.5 | 1041 | 973 | 0.85 |
| 4 | 59.2 | 30.9 | 6.49 | 4.13 | Ta₂O₅ 1.0 | 1020 | 943 | 1.8 |
| 5 | 59.2 | 30.9 | 6.49 | 3.89 | Ta₂O₅ 1.5 | 988 | 801 | 2.4 |
| 6 | 59.2 | 30.9 | 6.49 | 3.89 | Ta₂O₅ 2.0 | 836 | 605 | 4.3 |
| 7 | 59.2 | 30.9 | 6.49 | 3.89 | Ta₂O₅ 5.0 | 709 | 535 | 8.6 |
| 8 | 59.2 | 30.9 | 6.49 | 3.89 | V₂O₃ 0.5 | 948 | 715 | 0.4 |
| 9 | 59.2 | 30.9 | 6.49 | 3.89 | Nb₂O₅ 0.5 | 930 | 695 | 0.3 |

### EXAMPLE 2

Oxide powders of vanadium (V) and niobium (Nb) as elements from Group 5b of the periodic table other than tantalum oxide (Ta₂O₅) were mixed in the weight ratios shown in Table 1 (Samples 8 and 9). These mixed powders were formed into a slurry, molded and sintered under the same conditions as in Example 1 to obtain silicon nitride based sintered products. The thus obtained silicon nitride based sintered products were subjected to a 4-point bending strength test. The results are shown in Table 1.

Table 1 shows the 4-point bending strengths at room temperature and at high temperature (1000°C) of samples of the silicon nitride based sintered product of the present invention and a comparative sample of a silicon nitride based sintered product (sample Comp.) having no elements of Group 5b of the periodic table added thereto. The 4-point bending strength of the comparative sample of the silicon nitride based sintered product having no added elements of Group 5b of the periodic table was 940 MPa at room temperature, whereas the 4-point bending strength of the silicon nitride based sintered product of the present invention having 0.5 wt. part of tantalum oxide (Ta₂O₅) added thereto was 1041 MPa at room temperature and 973 MPa at a temperature of 1000°C. This sintered product thus exhibits a very high strength. It was also confirmed that the amount of volume contraction of the molded product caused by the sintering is small in the silicon nitride based sintered products of the present invention.

### EXAMPLE 3

Silicon (Si) powder, silicon nitride (Si₃N₄) powder, alumina (Al₂O₃) powder and yttria (Y₂O₃) powder were measured in the weight ratio of 58 : 31 : 4 : 7. These powders were mixed together with ethanol in a ball mill to prepare a slurry. The slurry was dried and crushed to prepare a powder mixture. From this powder mixture, a block-like molded product having a dimension of 15 x 60 x 7 mm was molded at a molding pressure of approximately 2000 kg/cm² by CIP. The molded product was reacted and sintered for about 10 hours in an atmosphere containing nitrogen at a temperature of about 1400°C.

Then, fine powder of silicon (Si) was mixed with ethanol to prepare a further slurry. This slurry was coated on the surface of the sintered product to form a coating layer having a thickness of about 200 microns. The reacted sintered product was then sintered for about 5 hours in an atmosphere containing nitrogen at a temperature of about 1900°C to prepare a silicon nitride based sintered product.

As a comparative sample, a molded product was prepared and sintered as described above in this example but without forming a slurry coated layer (obtained by mixing fine powder of silicon with ethanol) to prepare a silicon nitride based sintered product.

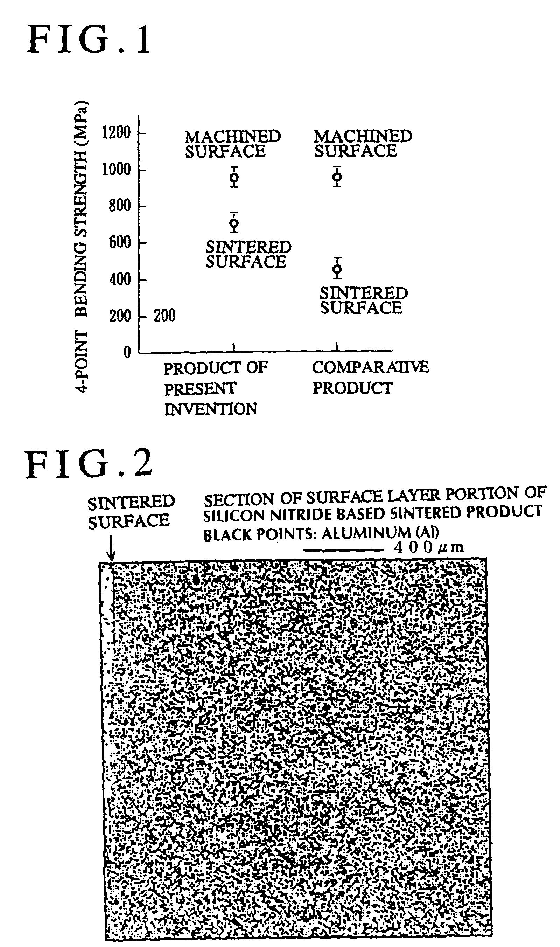

For the silicon nitride based sintered products of Example 3 and the comparative sample, 4-point bending strengths of the sintered surface and the processed surface were measured in compliance with JIS 1601. The results of these measurements are shown in Figure 1.

As will be apparent from Figure 1, the strength of the sintered surface of the silicon nitride based sintered product of the present invention was 720 MPa, which was materially improved as compared to the comparative sample, whose strength was 450 MPa. It is understood that the strength of the processed surface is not impaired.

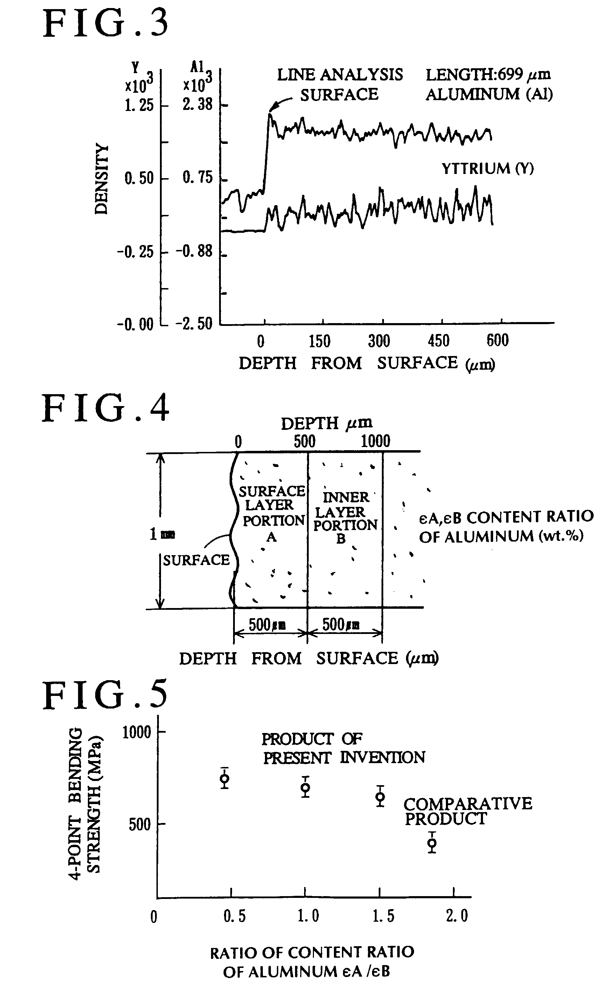

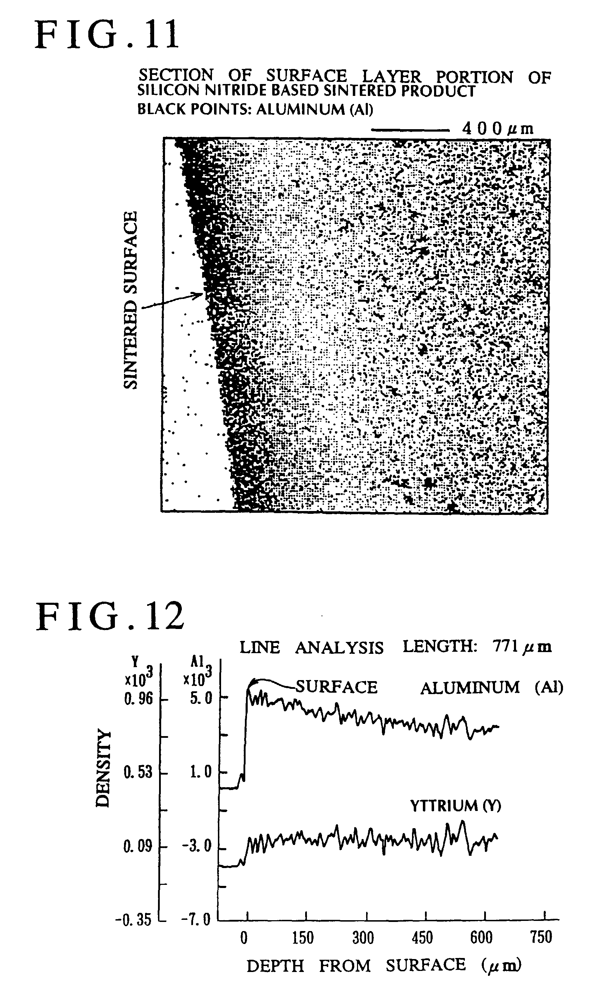

For the silicon nitride based sintered products of Example 3 and the comparative sample, sections (polished surfaces) of the silicon nitride based sintered products were analyzed using EPMA (Electro-Probe Micro-Analysis). Figures 2 and 11 are sectional views of portions of the surface layer of the silicon nitride based sintered products of Example 3 and the comparative sample, respectively. Figures 3 and 12 are plots indicative of the results of X-ray analysis for aluminum and yttrim (the result of analysis of aluminum element and yttrium element in a section (a polished surface) having an area of 1 mm² on the surface layer portions) in the silicon nitride based sintered products of Example 3 and the comparative sample, respectively. It has been confirmed from these analytical results that in the silicon nitride based sintered products of the present invention, elements of aluminum and yttrium were uniformly distributed in the sintered product as compared to the comparative sample.

Figure 5 shows the relationship between the ratio (∈A/∈B) of the content ratio ∈A of the aluminum component in the surface layer portion A (the layer of depth 0 to 500 microns from the surface) to the content ratio ∈B of the aluminum component in the inner layer portion B (the layer of depth 500 to 1000 microns from the surface) and the mechanical strength of the silicon nitride based sintered products obtained by Example 3. The results obtained are shown in Figure 5. It has been confirmed that the sintered products of the present invention, which are formed by sintering after coating with silicon powder so as to thereby obtain a silicon nitride based sintered product which is free from segregation or omnipresentation of the sintering assistant, has a uniform tissue, and has a sintered surface and surface layer portion having a high mechanical strength.

### EXAMPLE 4

Silicon nitride (Si₃N₄) powder, alumina (Al₂O₃) powder and yttria (Y₂O₃) powder were measured in the weight ratio of 92 : 3: 5. These powders were mixed together with ethanol in a ball mill to prepare a slurry. The slurry was dried and crushed to prepare a mixture powder. A molded product was prepared from this mixture powder, and a cylindrical molded product having an outside diameter of 35 mm, an inside diameter of 23 mm and a height of 24 mm was molded by CIP. The molded product was reacted and sintered for about 10 hours in an atmosphere containing nitrogen at a temperature of about 1400°C, in a manner similar to that of Example 3.

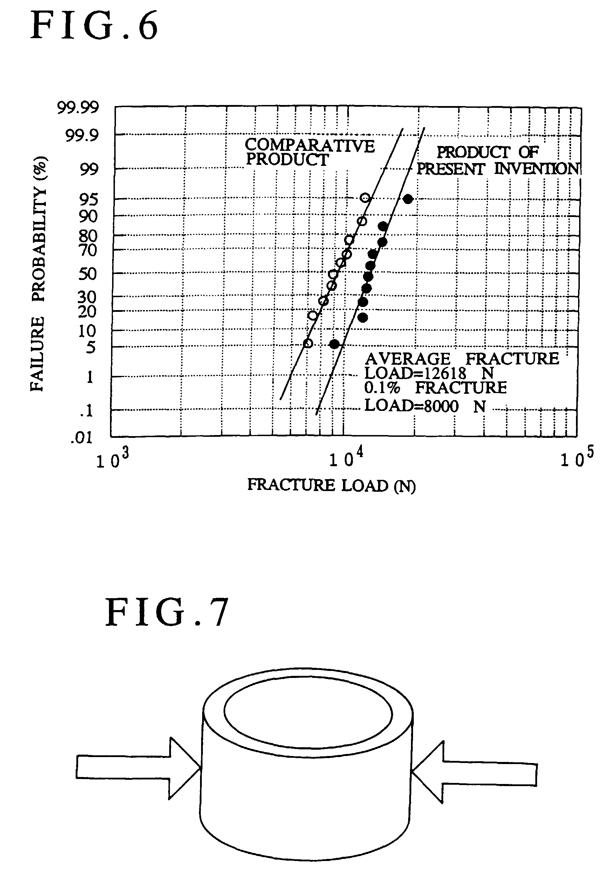

Then, fine powder of silicon (Si) was mixed with ethanol to prepare a further slurry. This further slurry was coated on the surface of the reacted sintered product to form a coating layer having a thickness of about 200 microns. The reacted sintered product was then sintered for about 5 hours in an atmosphere containing nitrogen at a temperature of about 1900°C to prepare a silicon nitride based sintered product. This sintered product is shown in Figure 7.

As a comparative sample, a molded product was prepared as described above in this example but without forming a slurry coated layer (obtained by mixing fine powder of silicon with ethanol) to prepare a silicon nitride based sintered product.

For the silicon nitride based sintered products of Example 4 and the comparative sample, the outer peripheral surfaces thereof were subjected to lapping after grinding, and the inner peripheral surfaces were left unprocessed. As indicated by the arrows in Figure 7, the breakdown loads were measured when a diametral load was applied to the silicon nitride based sintered products. Figure 6 shows a graph of the results of the breakdown test for cylindrical silicon nitride based sintered products of the present invention and the silicon nitride based sintered product of the comparative sample.

In the cylindrical silicon nitride based sintered products of the present invention, the strength of the inner peripheral surface, i.e., the sintered surface, was improved as compared to the comparative sample, and the breakdown strength was improved accordingly.

### EXAMPLE 5

Inexpensive silicon (Si) powder containing approximately 0.3 wt.% of iron as an impurity, silicon nitride (Si₃N₄) powder, yttria (Y₂O₃) powder, alumina (Al₂O₃) powder and oxide powder of at least one element of Group 5b of the periodic table, namely vanadium, niobium and tantalum, were mixed in the weight ratios shown in Table 2. Each powder mixture together with methanol were put into a resin pot and subjected to ball milling for about 48 hours to prepare a slurry. The slurry was then dried, crushed and molded by a press machine. The molded product was then subjected to CIP processing at a pressure of approximately 2000 kgf/cm². The molded product was first nitrogenized for 10 hours in a nitrogen atmosphere at a temperature of about 1400°C, and subsequently sintered for 4 to 8 hours at a temperature of about 1900°C to obtain a silicon nitride based sintered product.

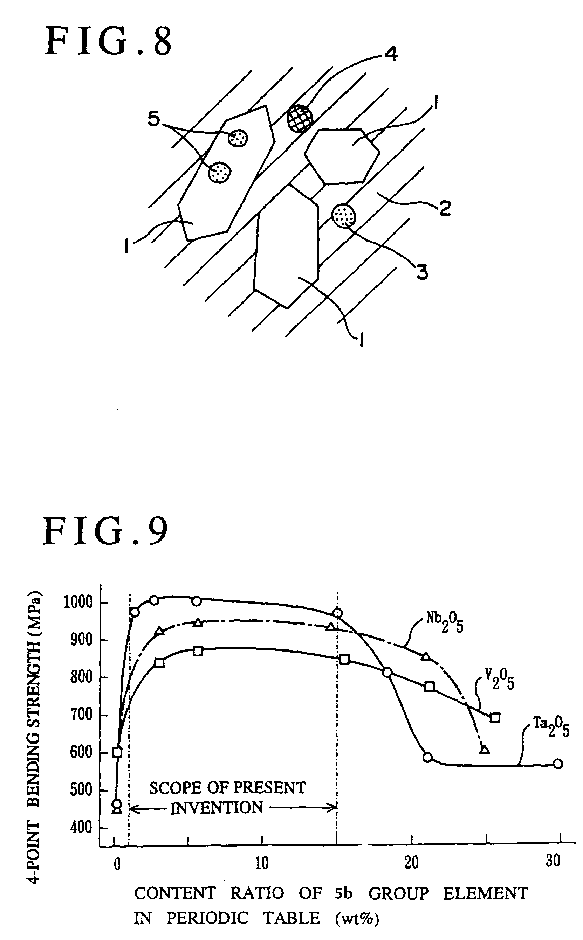

Figure 8 shows schematically the texture of a silicon nitride based sintered product obtained as described above. The silicon nitride based sintered product according to the present invention comprises a silicon nitride crystalline phase 1, a grain boundary phase 2 of a crystalline substance comprising silicon, aluminum, yttrium, oxygen and nitrogen, silicide phases 3, 5 of elements of Group 5b of the periodic table, and a silicide phase 4 of iron. Preferably, the particle size of the silicide phases of the elements of Group 5b of the periodic table is 5 micron or less. A part of the compound phase 5 of the elements of Group 5b of the periodic table is present within the silicon nitride crystalline phase 1 and the remainder of the compound phase 5 is present in the grain boundary phase 2.

**TABLE 2**

| Sample No. | material (wt.%) | | | | | relative density | bending strength | |
|---|---|---|---|---|---|---|---|---|
| | Si | Si₃N₄ | Y₂O₃ | Al₂O₃ | Group 5b elements | | room temp MPa | 1000°C MPa |
| 1 | 60 | 30 | 5 | 4.5 | Ta₂O₅ 0.5 | 99.5 | 980 | 795 |
| 2 | 60 | 30 | 4 | 4 | Ta₂O₅ 2.0 | 99.2 | 1050 | 815 |
| 3 | 60 | 20 | 8 | 7 | Ta₂O₅ 5.0 | 99.3 | 1020 | 870 |
| 4 | 60 | 20 | 3 | 2 | Ta₂O₅ 15.0 | 99.2 | 992 | 810 |
| 5 | 60 | 20 | 8 | 7 | Nb₂O₅ 5.0 | 99.0 | 920 | 805 |
| 6 | 60 | 20 | 8 | 7 | V₂O₃ 5.0 | 98.5 | 875 | 742 |
| Comp. | 55 | 20 | 2 | 2 | Ta₂O₅ 21.0 | 85.6 | 560 | 480 |
| Comp. | 30 | 30 | 5 | 5 | Ta₂O₅ 30.0 | 82.4 | 550 | 482 |
| Comp. | 60 | 30 | 5 | 5 | | 78.6 | 452 | 436 |

A 4-point bending strength test in compliance with JIS 1601 was performed on the silicon nitride based sintered products of the present invention and the comparative samples. Table 2 shows the composition of the raw materials, the relative density of the silicon nitride based sintered product (the ratio of theoretical density to actual density), and the results of the 4-point bending strength test.

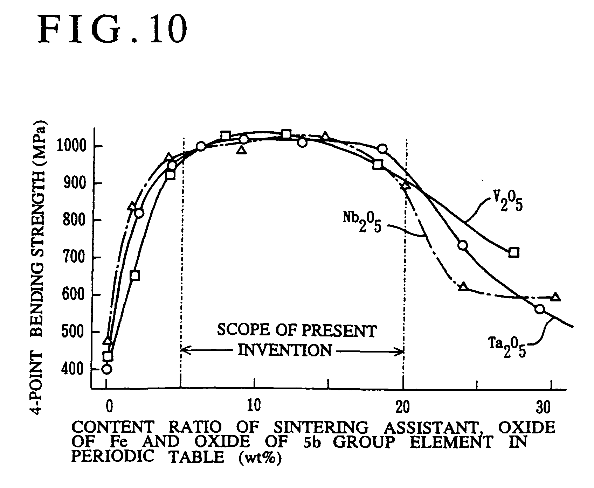

As shown in the Table 2 and Figures 9 and 10, according to the present invention, when the components silicon, aluminum, yttrium, nitrogen, oxygen, iron and elements of Group 5b of the periodic table contained said silicon nitride based sintered product are converted to silicon, silicon nitride, alumina, yttria, oxide of iron and oxide of the elements of Group 5b of the periodic table, the amount of alumina, yttria, oxide of iron and oxide of the elements of Group 5b of the periodic table is 5 to 20 wt.%, and specifically, the amount of the oxide of the elements of Group 5b of the periodic table, i.e, vanadium, niobium and tantalum, is from 0.05 to 15 wt.%. Such sintered product exhibits excellent heat resistant strength. Typically, the 4-point bending strength at normal (room) temperature is from 850 to 1050 MPa and at 1000°C is at least 700 MPa.

It will be understood that many modifications can be made to the above-described embodiments within the scope of the present invention as defined in the appended claims.

## Claims

1. A silicon nitride based sintered product having strength at a high temperature characterized in that said silicon nitride based sintered product is obtained by sintering a mixture, said mixture being a powder of silicon or a powder mixture of silicon and silicon nitride with a sintering assistant for the silicon nitride, a powder of a compound of iron and a powder of a compound containing at least one element of Group 5b of the periodic table.

2. The silicon nitride based sintered product according to claim 1, wherein said silicon nitride based sintered product contains silicon, aluminum, yttrium, oxygen, nitrogen, iron and at least one element of Group 5b of the periodic table, and when said components are present as a compound of silicon nitride, alumina, yttria, a compound of iron and a compound of at least one element of Group 5b of the periodic table and the weights of said components are represented by a, b, c, d and e, the following formulae are fulfilled:$\text{1≤ 100(b+c+d+e)x(a+b+c+d+e)≤15,}$$\text{1≤(b+c)/d,}$$\text{0.005≤ 100d/(a+b+c+d+e) ≤ 7.5,}$ and$\text{0.005≤ e/(b+c) ≤ 1}$

3. The silicon nitride based sintered product according to claim 1, wherein said at least one element of Group 5b of the periodic table is present as compound particles having a particle diameter of over 0.2 micron and occupying 0.1 to 9.0 % in a two dimensional section.

4. The silicon nitride based sintered product according to claim 1, wherein the ratio ∈A/∈B of the content ratio ∈B of an aluminum component contained in a layer of depth of 500 to 1000 microns from the surface of the silicon nitride based sintered product to the content ratio ∈A of an aluminum component contained in a layer of depth of 0 to 500 microns from the surface of the silicon nitride based sintered product is less than 1.5.

5. The silicon nitride based sintered product according to claim 1, wherein said silicon nitride based sintered product comprises a crystalline phase of silicon nitride, a grain boundary phase comprising said sintering assistant and said at least one element of Group 5b of the periodic table, a silicide phase of said at least one element of Group 5b of the periodic table, and a silicide phase of iron.

6. The silicon nitride based sintered product according to claim 5, wherein the amount of said silicide phase of said at least one element of Group 5b of the periodic table is less than 15 wt.% where oxide of said at least one element of Group 5b of the periodic table is the starting material.

7. The silicon nitride based sintered product according to claim 5 or 6, wherein the particles of said silicide phase of said at least one element of Group 5b of the periodic table are uniformly dispersed in said silicon nitride based sintered product, a part thereof being present in the grain boundary phase and the remainder being present in the silicon nitride crystalline phase.

8. The silicon nitride based sintered product according to any one of claims 5 to 7, wherein said silicide phase of said at least one element of Group 5b of the periodic table comprises particles having a particle diameter of less than 5 microns.

9. The silicon nitride based sintered product according to claim 5, wherein said grain boundary phase is a crystalline substance comprising silicon, aluminum, yttrium, oxygen, nitrogen and at least one element of Group 5b of the periodic table.

10. The silicon nitride based sintered product according to claim 9, wherein, when the silicon nitride based sintered product contains silicon, silicon nitride, yttria, alumina, oxide of iron and oxide of said at least one element of Group 5b of the periodic table, the amount of alumina, yttria, oxide of iron and oxide of said at least one element of Group 5b of the periodic table is from 5 to 20 wt.%, and the amount of the oxide of said at least one element of Group 5b of the periodic table is from 0.05 to 15 wt.%.

11. A method of manufacturing a silicon nitride based sintered product having strength at a high temperature, comprising preparing a mixture of silicon powder or a powder mixture of silicon and silicon nitride with a sintering assistant for the silicon nitride, a powder of a compound of iron and a powder of a compound of at least one element of Group 5b of the periodic table; molding said mixture into a molded product; and sintering said molded product.
